Europäisches Patentamt

European Patent Office

Office européen des brevets

(11) Publication number: **0 299 075**
**A1**

## (12) EUROPEAN PATENT APPLICATION

published in accordance with Art. 158(3) EPC

(21) Application number: **87907985.3**

(51) Int. Cl.³: **G 06 F 15/16**

(22) Date of filing: **07.12.87**

Data of the international application taken as a basis:

(86) International application number:
**PCT/JP87/00943**

(87) International publication number:
**WO88/04452 (16.06.88 88/13)**

(30) Priority: **08.12.86 JP 290535/86**

(43) Date of publication of application:
**18.01.89 Bulletin 89/3**

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **KURAKAKE, Mitsuo**
**Izumihaitsu 103 3-3-10, Tamadaira**
**Hino-shi Tokyo 191(JP)**

(72) Inventor: **KINOSHITA, Jiro**
**252, Shimotsuruma Yamato-shi**
**Kanagawa 242(JP)**

(74) Representative: **Brunner, Michael John et al,**
**GILL JENNINGS & EVERY 53-64 Chancery Lane**
**London WC2A 1HN(GB)**

(54) **PROCESSING UNIT HAVING AT LEAST ONE COPROCESSOR.**

(57) A processing unit having at least one coprocessor (15, 16), which comprises a host processor (11), a system memory (12), an input/output device, coprocessors (15, 16) and buses (14, 22, 23) for connecting them. The processing unit further comprises code memories (19, 20) for storing instruction codes for the coprocessors (15, 16), a data memory (21) for storing data that will be used by the coprocessors (15, 16), and address generators (17, 18) which enable the coprocessors (15, 16) to access the code memories (19, 20) and the data memory (21). The host processor (11) sets a group of instruction codes to the code memories (19, 20), sets the data for use in the operation to the data memory (21), and gives an execution instruction to the coprocessors (15, 16). The coprocessors (15, 16) are separated from the host processor (11) to execute the operation.

Croydon Printing Company Ltd.

## DESCRIPTION

TITLE OF THE INVENTION

Processing Unit Having at Least One Co-processor

TECHNICAL FIELD

The present invention relates to a processing unit having at least one co-processor (cooperating processor).

BACKGROUND ART

Hitherto, a co-processor (e.g., a high speed arithmetic unit) for a host processor has not been provided with an address generator therein and thus an instruction fetch and input or output of data therefor entirely depend on the host processor. Accordingly, the host processor, when executing an operation using the co-processor, must take data from the co-processor side and store that data in a memory or the like, after the host processor has given instructions and data, and the instructions are executed.

In the above-described conventional unit, however, the time needed for processing data for the co-processor in the processing of the host processor is increased in accordance with an increase of the number of co-processors, and thus the possibility of a reduction of the efficiency of the host processor itself is increased.

The present invention was created to solve the above-mentioned problem.

DISCLOSURE OF THE INVENTION

An object of the present invention is to provide a processing unit having at least one co-processor, wherein the co-processor can operate independently of a host processor and any reduction of the efficiency of the host processor can be suppressed to a minimum.

In the invention, there is provided a processing unit having at least one co-processor and comprising a host processor, a system memory, input or output devices (I/O), and at least one co-processor, which are interconnected by buses, and further comprising a code memory means provided in correspondence with the co-processor, for storing instruction codes for the co-processor, a data memory means for storing data for the co-processor to operate in correspondence with an instruction code, and address generators provided in correspondence with the co-processors for providing access by the co-processors to the code memory means and the data memory means, and wherein the host processor sets an instruction code group to be executed by the co-processor to the code memory means of the co-processor, sets data to be processed in the data memory means, supplies execution commands to the co-processor, and the co-processor executes the processing independently of the host processor.

By using the above-mentioned unit, the co-processor cooperating with the host processor comprises the code memory means and the data memory means, accesses an instruction code group set from the host processor into the code memory means and data set into the data memory means, can sequentially execute the instruction code group without the aide of the host processor, and thus can carry out the processing.

BRIEF EXPLANATION OF THE DRAWINGS

Figure 1 is a schematic block diagram explaining a conventional processing unit having co-processors; and,

Fig 2 is a block diagram of a processing unit having at least one co-processor according to an embodiment of the invention.

BEST MODE FOR CARRYING OUT THE INVENTION

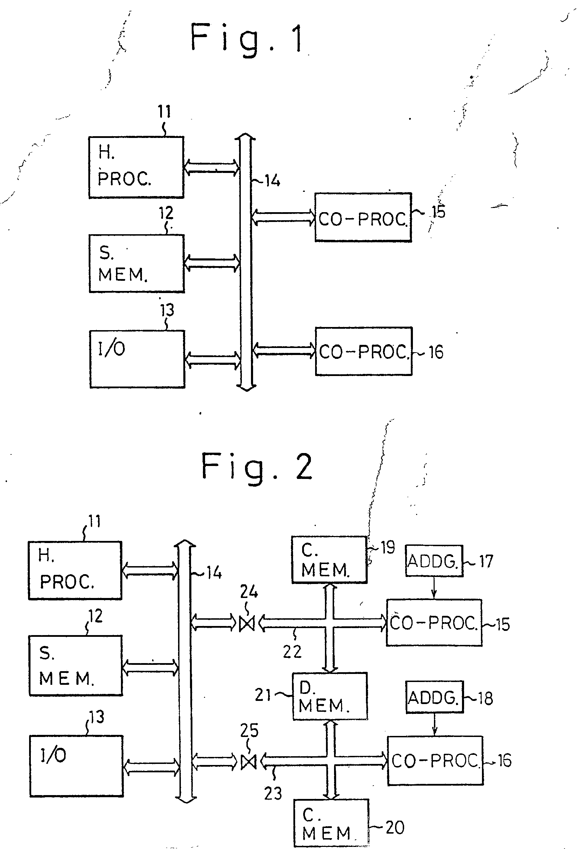

Prior to the explanation of the embodiment, a conventional unit is explained with reference to Fig. 1.

As shown in Fig, 1, co-processors (CO-PROC.) 15 and 16 controlled by a host processor (H. PROC.) 11 conventionally do not have address generators therein, and must rely entirely upon the host processor 11 for fetching instructions and for an input or output of data.  Therefore, the host processor 11, when executing the operation using the co-processor 15 or 16, supplies the instruction and the data to the co-processor 15 or 16, and after the execution of the instruction is completed, the data is taken out from the co-processor and stored in a memory or the like.

Figure 2 shows a block diagram of a processing unit having at least one co-processor according to an embodiment of the invention.  The unit comprises a host processor 11, a system memory (S. MEM.) 12, an input or output device (I/O) 13, a bus 14 interconnecting the above elements, co-processors 15 and 16, code memories (C. MEM.) 19 and 20, a data memory (D. MEM.) 21, address generators (ADDG.) 17 and 18, buses 22 and 23, and bilateral bus switches 24 and 25.

The co-processor 15 is connected to the code memory 19 and the data memory 21 through the bus 22. The co-processor 15 is provided with the address generator 17 and controls the same to access the code memory 19 or the data memory 21 in response to an address designated by the address generator 17, and fetches instructions or the like.

The host processor 11 transmits and stores an instruction code group to be processed in the co-processor 15 from the system memory 12 to the code memory 19 through the bus 14, the bilateral bus switch 24, and the bus 22.  Data necessary for the execution of the above-described instruction code group is also transmitted and stored from the system memory 12 to the data memory 21.

The instruction code group and the data necessary for the execution are stored in the code memory 19 and the data memory 21, and then the host processor 11 supplies an execution command to the co-processor 15 and disconnects the bilateral bus switch 24.  The co-processor 15 sequentially accesses instructions from the code memory 19 and accesses data from the data memory 21

0299075

to process operations, and after completing the processing, makes the bilateral bus switch 24 conductive, and thus the processed data is transmitted to the host processor 11. During the processing operation in the co-processor 15, the host processor 11 is separated therefrom by the bilateral bus switch 24.

The co-processor 16 processes the instruction code group from the host processor 11, using the code memory 20, the data memory 21, the address generator 18, the bus 23, and the bilateral bus switch 25 in the same way as the co-processor 15. The data memory 21 is used commonly with the co-processor 15. In this embodiment, a unit having two co-processors is explained, but the invention is not limited to this case.

## TABLE OF REFERENCE NUMERALS AND PARTS

11 ... host processor

12 ... system memory

13 ... input or output device

14 ... bus

15, 16 ... co-processor

17, 18 ... address generator

19, 20 ... code memory

21 ... data memory

22, 23 ... bus

24, 25 ... bilateral bus switch

CLAIMS

1.   A processing unit having at least one co-processor and including a host processor, a system memory, input or output devices, at least one co-processor, and buses interconnecting the above elements, comprising:

a code memory means provided in correspondence with the co-processor for storing instruction codes for the co-processor,

a data memory means for storing data used in the processing by the co-processor in response to an instruction code, and

address generators provided in correspondence with the co-processor, for accessing the code memory means and the data memory means by the co-processor,

the host processor setting an instruction code group for the co-processor in the code memory means of the co-processor, setting data used during an operation into the data memory means, supplying an execution command to the co-processor, and the co-processor executing the operation separately from the host processor.

2.   A processing unit having at least one co-processor as set forth in claim 1, wherein the bus connecting the host processor to the co-processor is provided with a bilateral bus switch in correspondence with the co-processor, whereby the co-processor is separated from the host processor.

Fig.1

Fig.2

0299075

# INTERNATIONAL SEARCH REPORT

International Application No PCT/JP87/00943

**I. CLASSIFICATION OF SUBJECT MATTER** (if several classification symbols apply, indicate all) [3]

According to International Patent Classification (IPC) or to both National Classification and IPC

Int.Cl$^4$    G06F15/16

**II. FIELDS SEARCHED**

| Minimum Documentation Searched [4] | |
|---|---|
| Classification System | Classification Symbols |
| IPC | G06F15/16, G06F9/38 |

| Documentation Searched other than Minimum Documentation to the Extent that such Documents are Included in the Fields Searched [5] | |
|---|---|
| Jitsuyo Shinan Koho | 1971 - 1986 |
| Kokai Jitsuyo Shinan Koho | 1971 - 1986 |

**III. DOCUMENTS CONSIDERED TO BE RELEVANT [14]**

| Category [*] | Citation of Document, [16] with indication, where appropriate, of the relevant passages [17] | Relevant to Claim No. [18] |
|---|---|---|
| X | JP, A, 61-204758 (Hitachi, Ltd.) 10 September 1986 (10. 09. 86) (Family: none) | 1 |
| X | JP, A, 59-16072 (Digital Equipment Corporation) 27 January 1984 (27. 01. 84) & EP, A2, 92429 & AU, A1, 1349883 & US, A, 4509116 & CA, A1, 1196108 | 1 |
| Y | JP, A, 57-25045 (NEC Corporation) 9 February 1982 (09. 02. 82) (Family: none) | 1 |
| Y | JP, A, 59-220821 (NEC Home Electronics Ltd.) 12 December 1984 (12. 12. 84) (Family: none) | 2 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| February 24, 1988 (24. 02. 88) | March 7, 1988 (07. 03. 88) |
| International Searching Authority [1] | Signature of Authorized Officer [20] |
| Japanese Patent Office | |

Form PCT/ISA/210 (second sheet) (October 1977)